# EUROPÄISCHE PATENTSCHRIFT

(11) **EP 0 598 980 B1**
(45) Veröffentlichungstag und Bekanntmachung des Hinweises auf die Patenterteilung: **24.04.1996**
(21) Anmeldenummer: 93109824.8
(22) Anmeldetag: 19.06.1993
(51) Int. Cl.: E04B 9/34, E04B 9/00, E04B 1/84

(54) **Luftschalldämpfer**
Acoustic damping element
Amortisseur acoustique

(30) Priorität: 21.11.1992 DE 4239245
(43) Veröffentlichungstag der Anmeldung: 01.06.1994
(73) Patentinhaber: Firma Carl Freudenberg, D-69469 Weinheim (DE)
(72) Erfinder: Jost, Thomas, D-6940 Weinheim (DE); Stief, Reinhard, D-6940 Weinheim (DE)

(56) Entgegenhaltungen:
- DE-U- 9 001 433
- US-A- 4 682 670

## Beschreibung

Die Erfindung betrifft einen Luftschalldämpfer, bestehend aus einem offenporigen Schaumstoffkörper.

Ein derartiger Luftschalldämpfer ist aus der DE-U-9 001 433 bekannt. Der Luftschalldämpfer ist als Wandelement ausgebildet und gelangt bevorzugt in Geschürrspülanlagen zur Anwendung. Der vorbekannte Luftschalldämpfer weist Schaumstoffplattenelemente aus einem offenzelligen Polyethylenschaum auf, die in Aufhängeschienen mit im wesentlichen U-förmigem Profil befestigt sind. Innerhalb des U-förmigen, nach innen geöffneten Profils der Aufhängeschienen sind Haltevorsprünge angeordnet, zur formschlüssigen Befestigung der Schaumstoffplattenelemente.

Ein weiterer Luftschalldämpfer ist aus der US-A-4,682,670 bekannt. In einem der Ausführungsbeispiele, Fig. 6, ist ein zylinderförmiger, zentraler innerer Stützkörper gezeigt, der mit gleichmäßig in Umfangsrichtung verteilten Nuten versehen ist, die sich in axialer Richtung entlang des Außenumfangs des Stützkörpers erstrecken. Innerhalb der Nuten sind plattenförmige Schallabsorptionselemente formschlüssig aufgenommen.

Bei den vorbekannten Luftschalldämpfern ist zu beachten, daß die Absorptionsfläche im Vergleich zum umbauten Raum, der vom Luftschalldämpfer eingenommen wird, vergleichsweise klein ist und die Wirksamkeit des einzelnen Schalldämpfers daher wenig befriedigend ist.

Der Erfindung liegt die Aufgabe zugrunde, einen Luftschalldämpfer der vorbekannten Art derart weiterzuentwickeln, daß sich eine relative Vergrößerung der Absorptionsfläche zur Baugröße ergibt und damit verbunden verbesserte Gebrauchseigenschaften und eine bessere Anpassung an den jeweiligen Anwendungsfall.

Der Schaumstoffkörper besteht im Rahmen der vorliegenden Erfindung aus einem verformbaren Werkstoffblock von im wesentlichen kubischer Gestalt, wobei der Werkstoffblock mit in einer Seitenfläche mündenden, sich parallel zueinander erstreckenden Durchtrennungen, beispielsweise in Form von Einschnitten, versehen ist, die in einem übereinstimmenden Abstand von der gegenüberliegenden Seitenfläche enden und daß der Werkstoffblock in Richtung der Mündung der Durchtrennungen, indem die Durchtrennungen aufgespreizt sind, aufgefächert ist. Bei einer derartigen Ausgestaltung ist von hervorzuhebender Bedeutung, daß sich zu beispielsweise würfelförmigen Schalldämpfern mit im wesentlichen gleichen Abmessungen durch die Auffächerung eine Vergrößerung der Absorptionsfläche um Faktor 3 bis 10 ergibt, abhängig von der Größe des Werkstoffblocks und der Anzahl der Durchbrechungen. Die Größe der Absorptionsfläche bedingt eine verbesserte Schallabsoption und damit bessere Gebrauchseigenschaften. Ferner ist von Vorteil, daß ein Transport des Luftschalldämpfers zum Bestimmungsort einfach und problemlos möglich ist, da der Werkstoffblock in seiner herstellungsbedingten, kompakten Gestalt transportiert werden kann. Die offenporigen Oberflächen der einstückig ineinander übergehenden Teilkörper sind während des Transports vor mechanischen Beschädigungen zuverlässig geschützt. Durch die Anzahl der sich parallel zueinander erstreckenden Durchtrennungen kann die Größe der zur Schalldämpfung erforderlichen Oberfläche dem jeweiligen Anwendungsfall angepaßt werden. Der montierte Werkstoffblock weist während der bestimmungsgemäßen Verwendung eine im wesentlichen sternförmige Gestalt auf.

Um beim Auffächern des Werkstoffblocks während der Montage ein Einreißen desselben im Bereich der Enden der Durchtrennungen zu vermeiden, sind die Durchtrennungen nach einer vorteilhaften Ausgestaltung entlang ihrer Enden zu Ausnehmungen erweitert. Eine besonders große Widerstandsfähigkeit gegen mechanische Biegebelastungen liegt vor, wenn die Ausnehmungen ein im wesentlichen kreisförmig begrenztes Profil aufweisen.

Um ein Auffächern des Werkstoffblocks unter Einsatz geringer Kräfte zu ermöglichen und Werkstoffstauchungen auf der den Durchtrennungen gegenüberliegenden Seite zu verhindern, kann der Werkstoffblock auf der den Durchtrennungen gegenüberliegenden Seite mit sich parallel zu den diesen erstreckenden Eintiefungen versehen sein.

Materialschwächungen, die insbesondere während der Montage zu einer Beschädigung des Luftschalldämpfers führen könnten, können dadurch minimiert werden, daß die Eintiefungen zwischen einander unmittelbar benachbarten Durchtrennungen vorgesehen und im wesentlichen gerundet ausgeführt sind. Nach einer anderen Ausgestaltung können die Eintiefungen auch gegenüber von den Durchtrennungen angeordnet sein.

Nach einer weiteren vorteilhaften Ausgestaltung können die Eintiefungen ein im wesentlichen halbkreisförmiges Profil haben. Durch die Vermeidung scharfkantiger Richtungsänderungen wird ein Knicken im Bereich der Eintiefungen verhindert und einer möglicherweise den Werkstoffblock beschädigenden, hohen Flächenpressung vorgebeugt.

Der Werkstoffblock kann soweit aufgefächert sein, daß sich die einander gegenüberliegenden Enden berühren und daß die Enden miteinander verbunden sind.

Dadurch wird ein Zurückfedern des aufgefächerten Werkstoffblocks in seine kubische Ausgangsform verhindert. Die Verbindung der einander gegenüberliegenden Enden kann beispielsweise durch Verkleben der Oberflächen oder Zusammenstecken erfolgen, wobei die beiden aufklappbaren Teilkörper, die den Werkstoffblock begrenzen, bevorzugt derart proportioniert sind, daß sie im verbundenen Zustand die gleichen Absorptionseigenschaften aufweisen, wie die übrigen Teilkörper.

Gemäß einer vorteilhaften Ausgestaltung kann der Werkstoffblock eine im wesentlichen übereinstimmende Höhe und Breite haben. Durch diese Ausgestaltung ist eine vergleichsweise große Eigensteifigkeit der Teilkörper im aufgefächerten Zustand bedingt. Verformungen der einzelnen Teilkörpers während einer langen Gebrauchsdauer sind bei einer derartigen Ausgestaltung nicht zu befürchten.

Der erfindungsgemäße Luftschalldämpfer kann beispielsweise als Deckenabsorber verwendet werden. Eine derartige Verwendung bietet sich insbesondere in Hallen an, in denen lärmende Industrieanlagen installiert sind, die aufgrund ihrer Funktion und/oder Größe nicht gekapselt werden können. Um eine möglichst effiziente Schallabsorption zu erreichen, können die Stirnseiten des aufgefächerten Luftschalldämpfers mit Halteplatten verbunden sein, um an der Decke oder an Wänden befestigt werden zu können.

Ein Ausführungsbeispiel des erfindungsgemäßen Luftschalldämpfers wird nachfolgend anhand der Zeichnungen näher erläutert.

In Fig. 1 ist die Ansicht eines Schaumstoffkörpers gezeigt, der herstellungsbedingt aus einem kubischen Werkstoffblock besteht. Der Werkstoffblock ist in seiner Transportstellung gezeigt.

In Fig. 2 ist der Werkstoffblock aus Fig. 1 in seiner Arbeitsstellung aufgefächert gezeigt, wobei die einander zugewandten Enden des Werkstoffblocks adhäsiv verbunden sind. Dadurch ergibt sich in der Draufsicht eine im wesentlichen sternförmige Gestalt.

In Fig. 3 sind Schaumstoffkörper gezeigt, die im Bereich ihrer beiden Stirnseiten durch Halteplatten aufgenommen und an einer Decke eines Raumes befestigt sind.

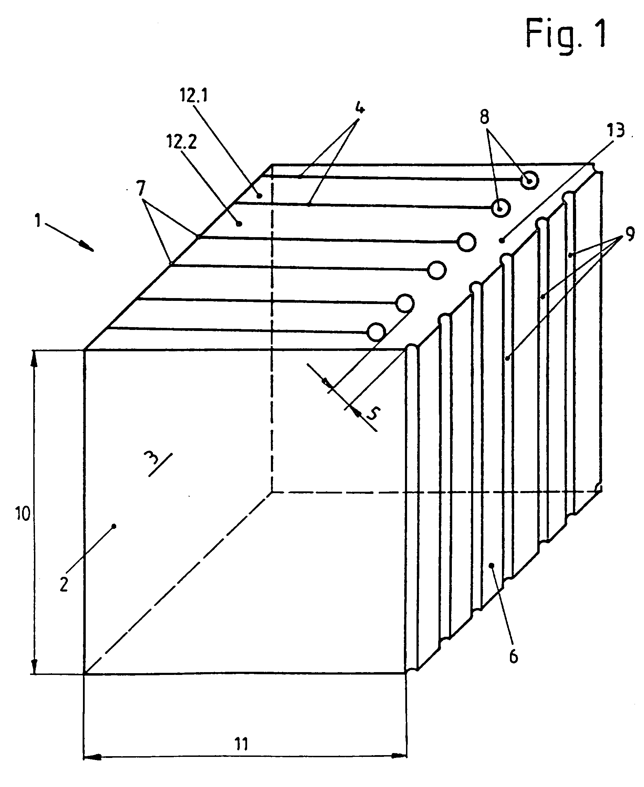

In Fig. 1 ist ein Schaumstoffkörper 1 aus einem Werkstoffblock 2 mit kubischer Gestalt gezeigt. Die Durchtrennungen 4 sind in diesem Ausführungsbeispiel unter Vermeidung einer Werkstoffentnahme hergestellt, beispielsweise durch Schneiden. Abweichend hiervon besteht auch die Möglichkeit, Durchbrechungen durch Ausschneiden von Zwischenstegen herzustellen. Die Durchtrennungen 4 erstrecken sich parallel zueinander von einer Seitenfläche 3 des würfelförmigen Werkstoffblocks 2 und enden in einem übereinstimmenden Abstand 5 von der gegenüberliegenden Seitenfläche 6. Die einzelnen, plattenförmigen Teilkörper 12.1, 12.2, ... sind einstückig ineinanderübergehend ausgebildet und münden in einem gemeinsamen Quersteg 13. Nach einer anderen, hier nicht dargestellten Ausführung, können die einzelnen Teilkörper 12.1, 12.2, ...in ein gemeinsames Verbindungsteil gesteckt werden, das im wesentlichen dem Quersteg 13 entspricht, der durch den Abstand 5 und die Seitenfläche 6 begrenzt ist. Um seiner bestimmungsgemäßen Verwendung nachkommen zu können, muß der Werkstoffblock 2 in Richtung der Mündung 7 der Durchtrennungen 4 aufgefächert werden. Die Durchtrennungen 4 sind jeweils an ihren Enden zu Ausnehmungen 8 erweitert. Das Profil der Ausnehmungen 8 ist im wesentlichen kreisförmig begrenzt, um beim Auffächern des Werkstoffblocks 2 eine Beschädigung, bedingt durch mechanische Zugspannungen im Bereich der Enden der Ausnehmungen 8, zu verhindern. Auf der gegenüberliegenden Seitenfläche 6 des Werkstoffblocks 2 sind Eintiefungen 9 angeordnet, die sich parallel zu den Ausnehmungen 8 erstrecken. Die Eintiefungen 9 dienen, ebenso wie die Ausnehmungen 8, der Entlastung des Werkstoffes beim Auffächern. Um eine Schwächung der verbleibenden Wandstärke zwischen den Ausnehmungen 8 und der gegenüberliegenden Seitenfläche 6 zu vermeiden, sind die Eintiefungen 9 zwischen den einander benachbarten Durchtrennungen 4 angeordnet. Durch die Eintiefungen 9, die in diesem Beispiel ebenfalls ein halbkreisförmiges Profil aufweisen, kann der Werkstoffblock 2 mit geringem Kraftaufwand aufgefächert werden. In diesem Ausführungsbeispiel sind die Höhe 10 des Werkstoffblocks 2 und dessen Breite 11 im wesentlichen übereinstimmend.

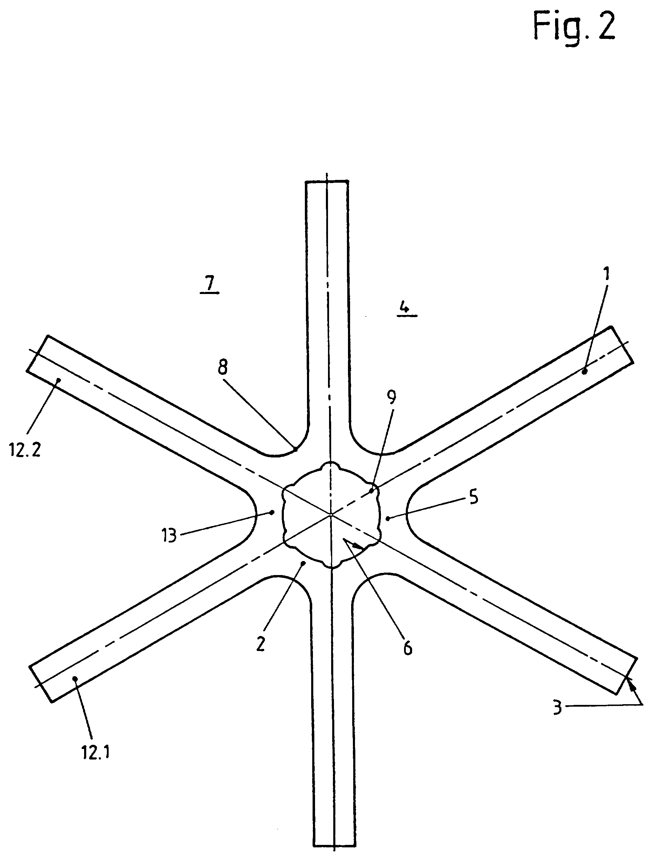

In Fig. 2 ist der Werkstoffblock 2 aus Fig. 1 im aufgefächerten Zustand in einer Draufsicht dargestellt. Die plattenförmigen Teilkörper 12.1, 12.2, ... sind im Bereich des Quersteges 13 einstückig ineinander übergehend ausgebildet, wobei in Umfangsrichtung die beiden äußeren Teilkörper miteinander verklebt sind. In diesem Ausführungsbeispiel weisen die Teilkörper 12.1, 12.2, ... eine übereinstimmende Dicke auf. In Abhängigkeit von den jeweiligen Gegebenheiten des Anwendungsfalles kann der Werkstoffblock 2 eine von diesem Ausführungsbeispiel abweichende Gestalt aufweisen, sowohl in der Form als auch in der Dimensionierung und der Wahl des Werkstoffs.

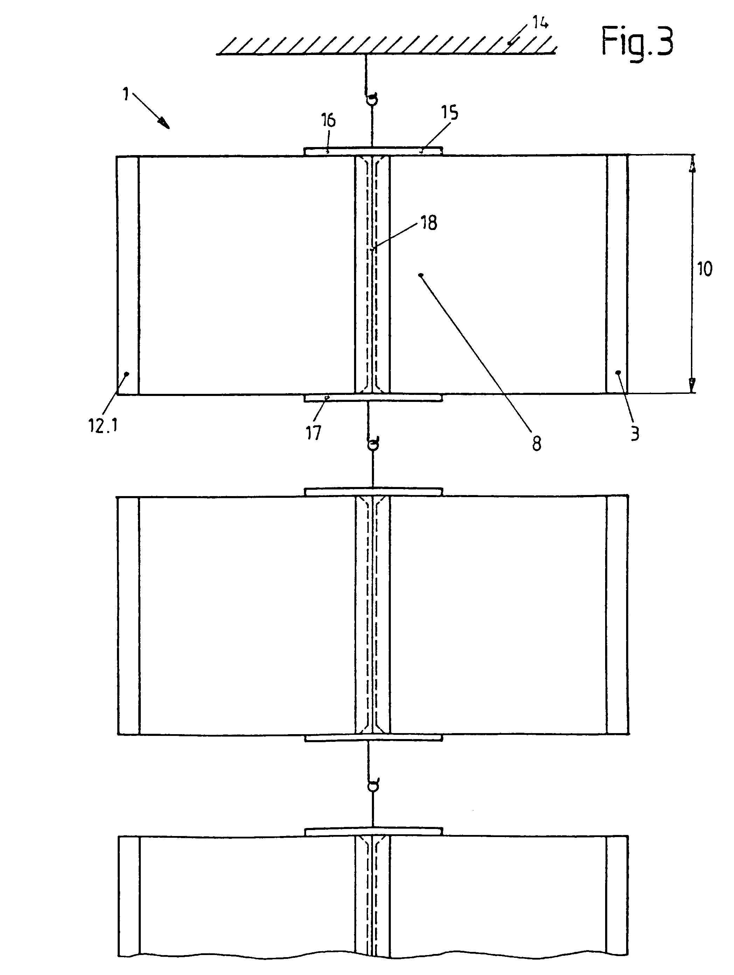

In Fig. 3 sind mehrere der erfindungsgemäßen Luftschalldämpfer an einer Decke 14, beispielsweise einer Industriehalle, befestigt. Die Schaumstoffkörper 1 sind jeweils in einer Halterung 15 festgelegt, die durch zwei Platten 16, 17 gebildet ist, die über einen Verbindungssteg 18 miteinander verbunden sind.

Der Verbindungssteg 18 ist in dieser Darstellung mit unterbrochenen Linien dargestellt. Durch die ortsfeste Zuordnung der beiden Platten 16, 17 über den Verbindungssteg 18 zueinander, ist der Schaumstoffkörper lediglich durch sein Eigengewicht belastet. Darüber hinausgehenden Kräften ist er nicht ausgesetzt, was sowohl im Hinblick auf seine Gebrauchseigenschaften als auch hinsichtlich einer langen Gebrauchsdauer von hervorzuhebender Bedeutung ist. Die Platten 16, 17 können wie hier dargestellt, mit Haken und Ösen versehen sein, wobei durch diese Ausgestaltung bedarfsweise eine beliebig große Anzahl der Luftschalldämpfer auf einfache Weise an einer Decke 14 befestigt werden kann.

## Patentansprüche

1. Luftschalldämpfer, bestehend aus einem offenporigen Schaumstoffkörper (1), dadurch gekennzeichnet, daß der Schaumstoffkörper (1) aus einem verformbaren Werkstoffblock (2) von im wesentlichen kubischer Gestalt besteht, daß der Werkstoffblock (2) mit in einer Seitenfläche (3) mündenden, sich parallel zueinander erstreckenden Durchtrennungen (4), beispielsweise in Form von Einschnitten, versehen ist, die in einem übereinstimmenden Abstand (5) von der gegenüberliegenden Seitenfläche (6) enden und daß der Werkstoffblock (2) in Richtung der Mündung (7) der Durchtrennungen (4), indem die Durchtrennungen (4) aufgespreizt sind, aufgefächert ist.

2. Luftschalldämpfer nach Anspruch 1, dadurch gekennzeichnet, daß die Durchtrennungen (4) entlang ihrer Enden zu Ausnehmungen (8) erweitert sind.

3. Luftschalldämpfer nach Anspruch 2, dadurch gekennzeichnet, daß die Ausnehmungen (8) ein im wesentlichen kreisförmig begrenztes Profil aufweisen.

## Claims

1. An acoustic damping element, composed of an open-pore foamed material body (1), characterized in that the foamed material body (1) is composed of a deformable material block (2) of substantially cuboid design, in that the material block (2) is provided with separations (4), for example in the form of incisions, which open out in a side face (3), extend parallel to one another and end at a matching distance (5) from the opposite side face (6), and in that the material block (2) is fanned out in the direction of the opening (7) of the separations (4) in that the separations (4) are spread apart.

2. An acoustic damping element according to claim 1, characterized in that the separations (4) are widened along their ends to form recesses (8).

3. An acoustic damping element according to claim 2, characterized in that the recesses (8) have a profile which is bounded in a substantially circular manner.

## Revendications

1. Amortisseur acoustique comprenant un corps en mousse expansée (1) à cellules ouvertes, caractérisé en ce que le corps en mousse expansée (1) est constitué d'un bloc de matière (2) déformable de forme substantiellement cubique, en ce que le bloc de matière (2) est pourvu de découpures (4) s'étendant parallèlement les unes aux autres, débouchant dans une face latérale (3), par exemple sous forme d'entailles, qui se terminent à une distance (5) concordante de la face latérale (6) opposée et en ce que le bloc de matière (2) est compartimenté en direction de l'embouchure (7) des découpures (4), par l'écartement des découpes (4).

2. Amortisseur acoustique selon la revendication 1, caractérisé en ce que les découpures (4) sont élargies en évidements (8) le long de leurs extrémités.

3. Amortisseur acoustique selon la revendication 2, caractérisé en ce que les évidements (8) présentent un profil limité substantiellement circulaire.
